(19) Europäisches Patentamt
European Patent Office
Office européen des brevets

(11) **EP 1 528 447 B1**

(12) **EUROPÄISCHE PATENTSCHRIFT**

(45) Veröffentlichungstag und Bekanntmachung des Hinweises auf die Patenterteilung:
**30.04.2008 Patentblatt 2008/18**

(51) Int Cl.:
*G05B 23/02* *(2006.01)* *G05B 5/01* *(2006.01)*

(21) Anmeldenummer: **04025697.6**

(22) Anmeldetag: **28.10.2004**

(54) **Diagnoseeinrichtung und- verfahren zur Überwachung des Betriebs eines Regelkreises**

Diagnostic method and device for monitoring the functioning of a control loop

Procédé et dispositf de diagnostic pour la surveillance du fonctionnement d'une boucle de réglage

(84) Benannte Vertragsstaaten:
**DE FR GB IT**

(30) Priorität: **30.10.2003 DE 10350610**

(43) Veröffentlichungstag der Anmeldung:
**04.05.2005 Patentblatt 2005/18**

(73) Patentinhaber: **SIEMENS AKTIENGESELLSCHAFT**
**80333 München (DE)**

(72) Erfinder: **Pfeiffer, Bernd-Markus**
**76744 Wörth (DE)**

(56) Entgegenhaltungen:
**EP-A1- 1 288 746** **WO-A1-01/82008**
**WO-A1-97/41494** **US-A- 5 719 788**
**US-A1- 2002 040 284**

**Beschreibung**

Die Erfindung betrifft eine Diagnoseeinrichtung zur Überwachung des Betriebs eines Regelkreises eines Automatisierungssystems nach dem Oberbegriff des Anspruchs 1 sowie ein entsprechendes Diagnoseverfahren nach dem Oberbegriff des Anspruchs 5.

Wartung und Instandhaltung von automatisierungstechnischen Anlagen können verbessert werden, wenn die korrekte Funktion von Teilanlagen oder Komponenten überwacht wird. Bei Nachlassen der Funktionsfähigkeit kann gezielt an der richtigen Stelle der Anlage mit Maßnahmen zur Wartung, Instandhaltung oder Fehlerbeseitigung eingegriffen werden.

Aus der DE 100 07 972 A1 ist ein Diagnose-Tool zur Verwendung in einem Prozesssteuersystem bekannt, das Probleme erfasst oder mangelhaft arbeitende Einrichtungen und Kreise identifiziert. Es wird ein Prozesssteuersystem beschrieben, das eine zentral angeordnete Prozesssteuereinrichtung enthält, die mit mindestens einer Bedienungs-Work-Station und einer oder mehreren Anlageneinrichtungen über analoge, digitale oder kombiniert analog digitale Busleitungen kommunikativ verbunden ist. Die Anlageneinrichtungen, welche beispielsweise Ventile, Ventilpositioniereinrichtungen, Schalter und Messwertgeber (z. B. Temperatur, Druck oder Durchflussmessumformer) sein können, führen Funktionen innerhalb des Prozesses durch, wie z. B. Öffnen oder Schließen von Ventilen oder die Messung von Prozessparametern. Die Prozesssteuereinrichtung empfängt Signale, welche die von den Anlageneinrichtungen gewonnenen Prozessmesswerte und/oder andere Informationen, die mit den Anlageneinrichtungen im Zusammenhang stehen, anzeigen. Sie verwendet diese Signale, um eine Steuerroutine zu verwirklichen und erzeugt Steuersignale, welche zu den Anlageeinrichtungen gesendet werden, um den Ablauf des Prozesses zu steuern. Informationen von den Anlageneinrichtungen und der Steuereinrichtung werden einem oder mehreren Anwendungsprogrammen verfügbar gemacht, die von der Bedienungs-Work-Station durchgeführt werden, um eine Bedienungsperson in die Lage zu versetzen, eine gewünschte Funktion hinsichtlich des Prozesses durchzuführen, beispielsweise das Betrachten des gegenwärtigen Prozesszustands, Modifizieren des Betriebsablaufs des Prozesses, usw. Zur besseren Strukturierung der Steuerungsaufgabe werden Funktionsblöcke verwendet, die jeweils von anderen Funktionsblöcken Eingaben empfangen und/oder Ausgabesignale an andere Funktionsblöcke ausgeben. Sie führen jeweils einen bestimmten Teil des Prozesssteuerbetriebs durch, beispielsweise das Messen oder Erfassen eines Prozessparameters, die Steuerung einer Einrichtung oder die Aufgabe eines PID-Reglers. Das bekannte Diagnose-Tool sammelt und speichert automatisch Daten, die zu den verschiedenen Funktionsblöcken von Einrichtungen und Kreisen innerhalb des Prozesssteuersystems gehören, und verarbeitet diese Daten um zu bestimmen, welche Komponenten des Prozesssteuersystems Probleme haben, die zu einer reduzierten Leistungsfähigkeit der Anlage führen können. Zur Problemerkennung verwendet das Diagnose-Tool eine Streuungsangabe, die beispielsweise auf der Basis der Differenzen zwischen einem historischen statistischen Zustand einer Einrichtung über eine vorbestimmte Zeitdauer, beispielsweise die durchschnittliche Stellung des Ventils einer Ventileinrichtung, und dem gegenwärtigen Zustand der Einrichtung, in diesem Beispiel die gegenwärtige Stellung des Ventils, berechnet werden kann. Als weiteres Beispiel ist für eine Anwendung bei einem Steuerfunktionsblock eine Streuungsangabe als stochastisches Merkmal beschrieben, das auf einer Abweichung zwischen einer Prozessparametereingabe des Funktionsblocks und einem Sollwert, der dem Funktionsblock für diesen Parameter angegeben ist, basiert. Ein Nachteil des bekannten Diagnose-Tools mit Auswertung eines stochastischen Merkmals von Prozessparametern ist, dass ein im statistischen Sinne stationärer Prozess vorausgesetzt wird. Es ist keine Diagnose des Übergangsverhaltens, beispielsweise bei Ausregelvorgängen, möglich. Denn hier verletzt jeder Sollwertsprung eines Reglers die Voraussetzungen eines stationären Prozesses in erheblichem Maße und führt zu fehlerhaften Aussagen bei der Auswertung derartiger stochastischer Merkmale.

Aus der US 6 192 321 B1 ist ein Diagnoseverfahren für einen Prozessregler bekannt, der in einer Regelschleife den Ablauf eines Prozesses regelt. Während des Prozessbetriebs überwacht die Diagnoseeinrichtung, ob sich der Prozess in einem stationären Zustand befindet. Ist dies der Fall, wird durch die Diagnoseeinrichtung ein Stellsignal eines Reglers durch ein Testsignal ersetzt, das somit dem Stellglied anstelle des Stellsignals zugeführt wird. Durch das Testsignal wird das Stellglied dazu angeregt, eine deterministische Folge von Operationen durchzuführen, die derart ausgelegt sind, dass sie den Prozess nur minimal beeinflussen. Die Diagnoseeinrichtung erfasst die Antwortsignale, die sich beim Prozess nach Anregung durch das Testsignal ergeben. Bei geeigneter Wahl des Testsignals können so durch Analyse der Antwortsignale beispielsweise die Breite einer Unempfindlichkeitszone, eine Antwortzeit, eine Verstärkung oder ein Überschwingen berechnet werden. Dieses Diagnoseverfahren hat jedoch den Nachteil, dass der normale Ablauf des Prozesses gestört wird, wenn auch diese Störung geringfügig oder lediglich von kurzer Zeitdauer ist. Zudem wird nicht der gesamte Regelkreis durch die Diagnose überwacht, sondern lediglich der Teil, auf den das Stellsignal des Reglers gegeben wird. Ein weiterer Nachteil ist darin zu sehen, dass keine Diagnose eines Regelkreises im stationären Zustand durchführbar ist, ohne den Prozessablauf in irgendeiner Weise zu stören

Aus der US 2002/0040284 A1 sind ein Verfahren und eine Einrichtung zur Feststellung und Beurteilung von Instabilitäten in Regelkreisen bekannt. Dazu besitzt die Einrichtung einen Speicher, in welchem Zeitfolgen verschiedener Größen des Regelkreises für eine spätere Auswertung abgespeichert werden. Zur Feststellung einer Instabilität wird beispielsweise die Varianz einer Regelgröße als ein stochastisches Merkmal berechnet und mit einem Referenzwert verglichen. Zur anschließenden Untersuchung der Fehlerursache berechnet eine Auswerteeinrichtung beispielsweise die in den einzelnen Gliedern der Regelstrecke verursachte Phasenverschiebung als ein deterministisches Merkmal.

Der Erfindung liegt die Aufgabe zugrunde, eine Diagnoseeinrichtung und ein Diagnoseverfahren zu schaffen, mit welchen der Betrieb von Regelkreisen in einer prozesstechnischen Anlage quasi permanent und automatisch überwacht werden kann.

Zur Lösung dieser Aufgabe weist die neue Diagnoseeinrichtung der eingangs genannten Art die im kennzeichnenden Teil des Anspruchs 1 angegebenen Merkmale auf. In den abhängigen Ansprüchen sind Weiterbildungen der Erfindung und in Anspruch 5 ein Diagnoseverfahren beschrieben.

Die Erfindung hat den Vorteil, dass sie eine Überwachung von Regelkreisen und aller am jeweiligen Regelkreis beteiligter Komponenten einer prozesstechnischen Anlage während des Anlagenbetriebs quasi permanent ermöglicht, also sowohl im stationären Zustand als auch bei Ausgleichsvorgängen. Es kann daher schneller bei Nachlassen der Leistungsfähigkeit einzelner Regelkreise an der richtigen Stelle der Anlage mit Fehlerbeseitigungs- oder Verbesserungsmaßnahmen eingegriffen werden. In vorteilhafter Weise ist neben der Diagnose eines Regelkreises im stationären Zustand auch eine Diagnose des Übergangsverhaltensbei Sollwertsprüngen möglich. Im Fall einer Anregung des Regelkreises im Wesentlichen entsprechend einem Sollwertsprung, insbesondere bei einem exakten Sollwertsprung, werden die relative Überschwingweite und/oder das Einschwingverhältnis, das heißt der Quotient aus Anstiegszeit und Einschwingzeit, als deterministische Merkmale bestimmt. Das hat den Vorteil, dass beide Merkmale sehr direkte und diagnostisch gut auswertbare Rückschlüsse auf die Funktionsweise des Regelkreises und die Regelgüte zulassen. Beide Merkmale sind dimensionslos und unabhängig von der jeweiligen Applikation, in welcher der Regelkreis betrieben wird. Zur Vorbestimmung eines Referenzwerts, mit welchem ein bei einer Diagnose während des Regelbetriebs bestimmter Wert des jeweiligen Merkmals verglichen wird, sind daher keine applikationsspezifischen Berechnungen oder empirische Messungen im Vorfeld erforderlich. Fehldiagnosen, die bei bisherigen Diagnoseeinrichtungen mit Auswertung der Varianz verschiedener Prozessparameter im Fall von Sollwertänderungen auftreten könnten, werden zudem weitgehend vermieden. Ein weiterer Vorteil ist darin zu sehen, dass im Sinne einer nicht-invasiven Diagnose nur die im regulären Prozessbetrieb anfallenden Daten verwendet werden. Der Prozess wird somit in keiner Weise durch die Diagnose beeinflusst. Dabei stellt der Regelkreis in einer automatisierungstechnischen Anlage eine Funktionsebene dar, auf der sich anbahnende Fehler besonders schnell und zuverlässig erkannt werden können. Der Regelkreis hat eine klar definierte Aufgabe und nach der Inbetriebnahme ein definiertes Verhalten. Abweichungen von diesem Sollverhalten sind durch eine Signalverarbeitung ohne zusätzliche Sensorik erkennbar und lassen meist eine Lokalisierung von Fehlerquellen innerhalb dieses Regelkreises bis auf die einzelnen Komponenten Messumformer, Regler, Stellglied und Regelstrecke zu.

Im Fall eines im Wesentlichen stationären Zustands ist es vorteilhaft, die Varianz der Folge von Istwertdaten als stochastisches Merkmal zu bestimmen und mit einem zugehörigen Referenzwert zu vergleichen, der an demselben Regelkreis in einem gut arbeitenden Zustand vorbestimmt und abgespeichert wurde. Dies führt zu einer leichten Erkennbarkeit von Störungen an Anlagenkomponenten, die sich im Regelkreis befinden. Zudem wird eine bessere Aussagefähigkeit der Diagnose erreicht, da zum Vergleich ein am realen Regelkreis gemessener Referenzwert herangezogen wird.

In vorteilhafter Weise wird eine Varianzerhöhung aufgrund von Abklingvorgängen der Variablen des Regelkreises nach vorheriger Anregung durch eine Sollwertänderung als Ursache einer Fehldiagnose ausgeschlossen, wenn die Auswerteeinrichtung zur Bestimmung eines stochastischen Merkmals durch die Auswahleinrichtung erst wieder aktiviert wird, wenn nach Beginn des Sollwertsprungs bei im Wesentlichen konstanten Sollwertdaten ein vorgebbares Vielfaches der Einschwingzeit des Regelkreises vergangen ist. Danach entspricht die Varianz der Prozessvariablen wieder derjenigen, die im stationären Zustand vorherrscht.

Die Diagnoseeinrichtung kann vorteilhaft als Software-Funktionsbaustein ausgebildet werden, der in einer graphischen Bedienoberfläche eines Engineering-Systems mit Funktionsbausteinen des Regelkreises verschaltbar und zum Betrieb der Diagnoseeinrichtung in ein Automatisierungsgerät ladbar ist. Dieser Funktionsbaustein kann beispielsweise als PCS7-Funktionsbaustein für SIMATIC-Steuerungen der Siemens AG ausgeführt und mit einem so genannten Faceplate zur Realisierung einer Mensch-Maschine-Schnittstelle auf einem Bedien- und Beobachtungsgerät der automatisierungstechnischen Anlage versehen werden.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1    ein Blockschaltbild einer automatisierungstechnischen Anlage,

Figur 2    eine Prinzipdarstellung eines Diagnose-Funktions-Bausteins und

Figur 3    ein Zeitdiagramm einer Sprungantwort zur Verdeutlichung deterministischer Merkmale.

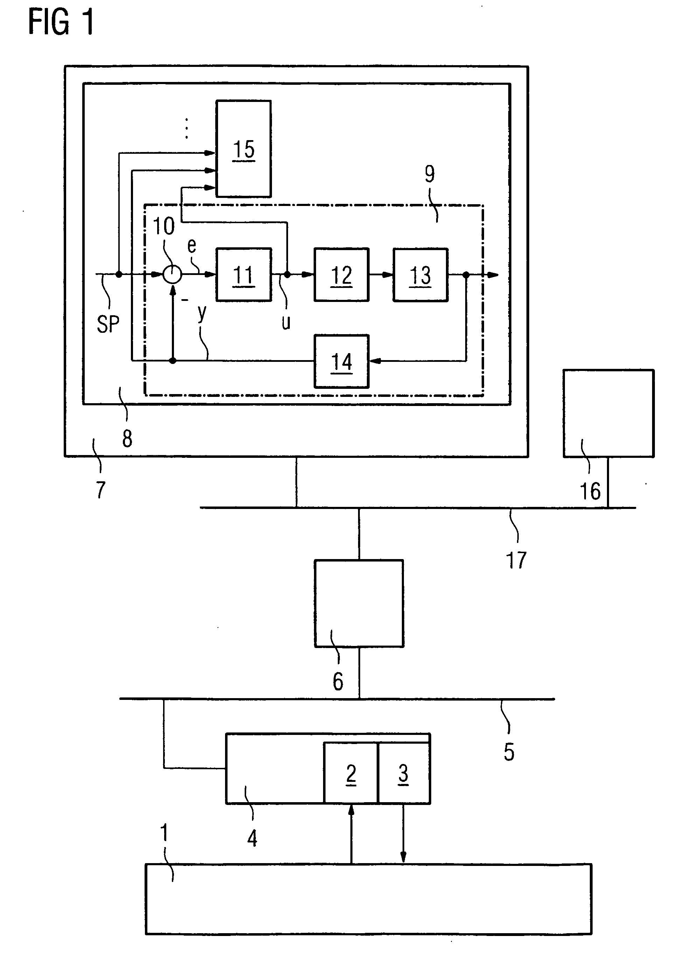

In Figur 1 ist der prinzipielle Aufbau einer automatisierungstechnischen Anlage dargestellt. An einem Prozess 1 werden Prozessvariablen gemessen und durch eine Analogeingabe 2 eingelesen. Zur Steuerung des Prozesses 1 gibt eine Analogausgabe 3 in Abhängigkeit der gemessenen Prozessvariablen Steuersignale an den Prozess 1 aus. Die Analogeingabe 2 und die Analogausgabe 3 sind Bestandteile einer dezentralen Peripherie 4. Über einen Feldbus 5 sind die dezentrale Peripherie 4 sowie weitere, der Übersichtlichkeit wegen in der Figur 1 nicht dargestellte Feldgeräte mit einer speicherprogrammierbaren Steuerung 6 verbunden. Während des Betriebs der automatisierungstechnischen Anlage läuft in der speicherprogrammierbaren Steuerung 6 auf einem nicht dargestellten Prozessor ein Steuerungsprogramm ab, das beispielsweise die Funktion eines Reglers und einer Diagnose eines Regelkreises enthält. Das Steuerungsprogramm wird mit Hilfe eines Engineering-Systems 7, z. B. SIMATIC PCS7, entworfen. Als Hardware-Basis kann hierzu beispielsweise ein Personal Computer dienen. In Figur 1 ist weiterhin ein graphischer Funktionsbausteinplan 8 dargestellt, der beispielhaft den Entwurf eines Regelkreises mit Überwachungseinrichtung verdeutlichen soll. Ein derartiger Funktionsbausteinplan kann auf dem Engineering-System 7 graphisch editiert werden. In einem Regelkreis 9 ist hinter einem Subtrahierer 10 ein Regler 11 angeordnet, der aus der Abweichung zwischen einem Sollwert SP und einer Regelgröße y, das heißt in Abhängigkeit einer Regelabweichung e, eine Stellgröße u bestimmt. Diese wird auf einen Analogausgabebaustein 12 gegeben, dessen Ausgangsgröße auf einen Prozess 13 wirkt. Mit einem Analogeingabebaustein 14 wird die Regelgröße y gemessen und auf den Subtrahierer 10 zurückgeführt. Dem Regelkreis 9 ist ein Überwachungsbaustein 15 zugeordnet, der den Sollwert SP, die Stellgröße u und die Regelgröße y auswertet. Neben den Prozessvariablen des gezeigten Regelkreises 9 kann der Diagnosebaustein 15 durch Auswertungen weiterer Prozessvariablen - wie auf der linken Eingangsseite des Bausteins 15 durch 3 Punkte symbolisiert - weitere, in der Figur nicht dargestellte Regelkreise überwachen. Die Ausgabe der Diagnoseergebnisse erfolgt über ein Faceplate, das in einer Bedien- und Beobachtungs-Work-Station 16 angeordnet sein kann, die an dasselbe Datenübertragungsnetzwerk 17 angeschlossen ist, an dem sich auch das Engineering-System 7 und die speicherprogrammierbare Steuerung 6 befinden. Alternativ dazu kann jeder einzelne Regler-Funktionsbaustein seinen eigenen Diagnose-Baustein als Zusatz bekommen. Überblicksdarstellungen zum Zustand aller Regelkreise werden dann mit den Mitteln des Prozessleitsystems erstellt, in dem die Informationen aller Diagnose-Funktionsbausteine zusammengeführt werden. Nach dem Entwurf der Steuerungssoftware wird diese in die speicherprogrammierbare Steuerung 6 geladen und läuft während des Betriebs der automatisierungstechnischen Anlage dort entsprechend den verwendeten Funktionsbausteinen und ihren Verbindungen ab.

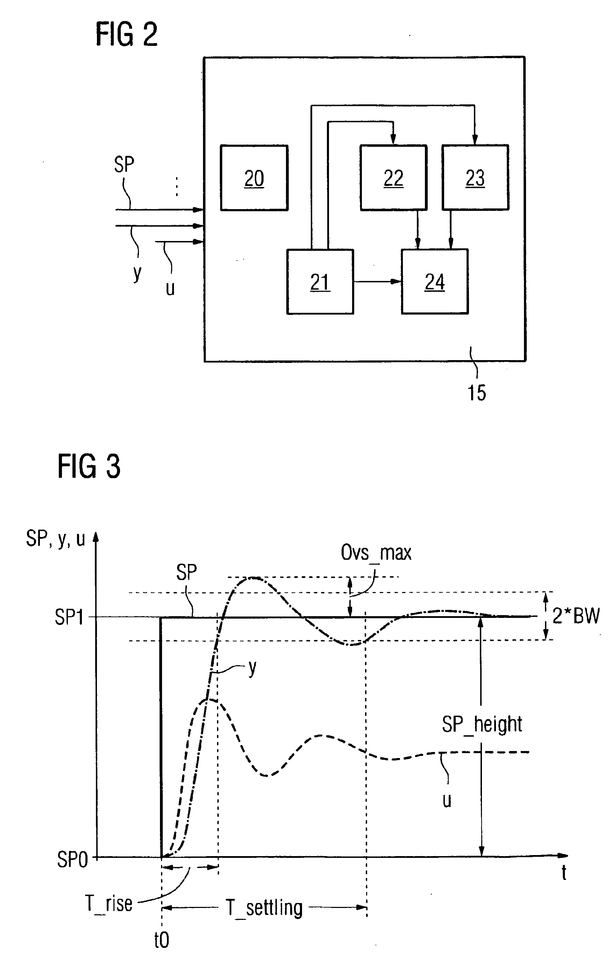

Figur 2 zeigt den prinzipiellen Aufbau eines Diagnose-Funktionsbausteins. Eingangssignale sind die zu überwachenden Prozessvariablen, im gezeigten Ausführungsbeispiel der Sollwert SP, die Regelgröße y und die Stellgröße u. Zusätzlich können weitere Prozessvariablen überwacht werden und dem Diagnose-Funktionsbaustein 15 zugeführt werden. In einem Datenspeicher 20 wird jeweils eine Folge von Sollwert und Istwertdaten des Regelkreises, das heißt ein Abschnitt des zeitlichen Verlaufs des Sollwerts SP und ein Abschnitt des zeitlichen Verlaufs der Regelgröße y, abgespeichert. Eine Auswahleinrichtung 21 analysiert den Zustand des zugehörigen Regelkreises anhand der Folge der Sollwertdaten. Im Fall eines im Wesentlichen stationären Zustands aktiviert die Auswahleinrichtung 21 eine Auswerteeinrichtung 22 zur Bestimmung zumindest eines stochastischen Merkmals, z. B. der Varianz, der überwachten Prozessvariablen. Die Auswerteeinrichtung 22 vergleicht im Betrieb der automatisierungstechnischen Anlage ermittelte Werte der Varianz mit jeweils zugehörigen, vorbestimmten Referenzwerten. Wird der jeweilige Referenzwert überschritten, so kann dies auf einen Fehler im Regelkreis hindeuten. Stellt die Auswahleinrichtung 21 eine Anregung des Regelkreises im Wesentlichen entsprechend einem vorbestimmten, insbesondere sprungförmigen, Verlauf des Sollwerts fest, so aktiviert sie eine Auswerteeinrichtung 23 zur Bestimmung zumindest eines deterministischen Merkmals und vergleicht diesen bestimmten Wert des Merkmals mit einem zugehörigen, vorbestimmten Referenzwert. Vorzugsweise werden bei Anregung durch einen Sollwertsprung das Einschwingverhältnis der Sprungantwort und/oder die relative Überschwingweite als deterministische Merkmale ausgewertet. Neben den beiden genannten Zuständen des Regelkreises kann es weitere Zustände geben, in denen keine Auswertung der Prozessvariablen durchgeführt wird. Der durch die Auswahleinrichtung 21 ermittelte Zustand des Regelkreises sowie der in der Auswerteeinrichtung 22 bestimmte Wert eines stochastischen Merkmals und/oder der in der Auswerteeinrichtung 23 bestimmte Wert eines deterministischen Merkmals werden in einem Ergebnisspeicher 24 des Funktionsbausteins 15 abgelegt. Die Ausgabe der Werte und graphische Aufbereitung erfolgt mit Hilfe eines Faceplates auf der Anzeigeeinheit eines Bedien- und Beobachtungsgeräts, das auch eine Trendanalyse durchführt und deren Ergebnisse anzeigt.

Mit dem Diagnose-Funktionsbaustein 15 werden somit sowohl stochastische Merkmale von Prozessvariablen ausgewertet als auch deterministische Merkmale zur Diagnose herangezogen, welche zur Beurteilung der Regelgüte des Regelkreises relevant sind. Je nach Betriebszustand des Regelkreises werden automatisch die geeigneten Merkmale ausgewählt. Wenn am Regelkreis durch Auswertung des Verlaufs des Sollwerts SP ein Sollwertsprung detektiert wird, werden anhand des zeitlichen Verlaufs der Sprungantwort der Regelgröße y des geschlossenen Regelkreises zwei deterministische Merkmale bestimmt: die relative Überschwingweite und das Einschwingverhältnis. Dabei ist die relative Überschwingweite auf die Höhe des Sollwertsprungs bezogen. Das Einschwingverhältnis wird als Quotient aus Anstiegszeit und Einschwingzeit berechnet. Beide Merkmale lassen sehr direkte und diagnostisch gut auswertbare Rückschlüsse auf die Regelgüte zu. Wenn ein vorgebbares Vielfaches der Anstiegszeit, beispielsweise die vierfache Anstiegszeit, vergangen und die Sprungantwort eingeschwungen ist, befindet sich der Regelkreis wieder in einem stationären Zustand und die Auswertung kann wieder auf stochastische Merkmale Mittelwert und Varianz umgeschaltet werden. Vorzugsweise wird als Referenzvarianz statt der theoretischen Minimalvarianz des Regelkreises eine an diesem individuellen Regelkreis im Gutzustand real gemessene Varianz verwendet, um die Aussagefähigkeit eines so genannten Control Performance Index zu verbessern.

Funktionen zur Überwachung von Regelkreisen können auf unterschiedlichen Ebenen innerhalb der Systemarchitektur einer automatisierungstechnischen Anlage oder eines Prozessleitsystems angesiedelt werden. Gesichtspunkte für solche Entscheidungen sind zum einen der Bedarf an Speicherplatz und Rechenzeit sowie zum anderen der relevante Zeithorizont aber auch Aspekte wie Engineering-Aufwand sowie Bedienen und Beobachten. In einem Diagnose-Funktionsbaustein, der als Zusatzbaustein für einen Regler-Funktionsbaustein angesehen werden kann, können mit Vorteil die Funktionen untergebracht werden, die auf aktuelle Daten bzw. auf Daten aus einem beschränkten Zeitfenster einer Länge n mit n < 100 zugreifen. Soweit möglich ist eine rekursive Berechnung zur Auswertung der Daten zu bevorzugen, da hierbei auf Datenhaltungen praktisch verzichtet werden kann.

Bei der Auswertung im Funktionsbaustein 15 wird unterschieden zwischen deterministischen und stochastischen Merkmalen der Prozessvariablen. Im Normalbetrieb werden permanent stochastische Merkmale ausgewertet. Sobald jedoch mit der Auswahleinrichtung 21 beispielsweise ein Sollwertsprung erkannt wird, wird die Auswerteeinrichtung 23 aktiviert, die den Sollwertsprung bezüglich deterministischer Merkmale auswertet. Am Diagnose-Funktionsbaustein 15 wird ein entsprechendes Anzeige-Bit gesetzt. Sobald der Einschwingvorgang abgeschlossen und eine gewisse Zeit vergangen ist, werden die deterministischen Merkmale ausgegeben und das Anzeige-Bit wieder zurückgesetzt.

Anhand der zeitlichen Verläufe des Sollwerts SP, der Regelgröße y und der Stellgröße u werden eine Regelabweichung e und zeitliche Mittelwerte dieser Größen berechnet. Dabei ist eine rekursive Berechnungsformel anwendbar. Eine im Mittel bleibende Regelabweichung e bei konstantem Sollwert ist bereits ein Indiz für Probleme im Regelkreis, falls es sich bei dem verwendeten Regler um einen Regler mit I-Anteil handelt. Falls

ein stationärer Arbeitspunkt $(u_0, y_0)$ bekannt ist, lässt sich aus den berechneten Werten auch die mittlere aktuelle Prozessverstärkung $k_g$ schätzen, wenn man annimmt, dass nur mittelwertfreie Störungen eingreifen:

$$k_g = \frac{\overline{y} - y_0}{\overline{u} - u_0}$$

mit $\overline{y}$ - Mittelwert der Regelgröße y und
$\overline{u}$ - Mittelwert der Stellgröße u.

Je nach Anwendungsfall sind typische stationäre Arbeitspunkte oft vorab bekannt, z. B. bei einer Durchflussregelung: $y_0 = 0$ für $u_0 = 0$, das heißt das Ventil ist geschlossen, oder bei einer Temperaturregelung: $y_0 = y_{amb}$ für $u_0 = 0$, das heißt Umgebungstemperatur $y_{amb}$ bei ausgeschalteter Heizung. Oft können stationäre Arbeitspunkte auch bei der Erstinbetriebnahme ermittelt werden. Die Varianz als zentriertes Moment erfordert vom Ansatz her die Berechnung von Differenzen zwischen jedem aktuellen Wert einer Prozessvariablen und ihrem Mittelwert:

$$\sigma_y^2 = \frac{1}{n-1} \sum_{i=1}^{n} \left( y(i) - \overline{y} \right)^2 .$$

Die Streuung

$$\sigma_y = \sqrt{\sigma_y^2}$$

als Wurzel der Varianz lässt sich anschaulicher interpretieren, da sie dieselbe physikalische Einheit wie der Messwert hat.

Ein Control Performance Index CPI wird als Quotient einer Referenzvarianz der Regelgröße und ihrer aktuellen Varianz berechnet zu:

$$CPI = \frac{\sigma_{ref}^2}{\sigma_y^2} .$$

Der Control Performance Index bewegt sich normalerweise im Bereich zwischen 0 und 1. Wenn die aktuelle Streuung dem Referenzwert entspricht, erreicht der CPI den Wert 1. Falls die aktuelle Streuung dagegen sehr viel größer ist, liefert der CPI sehr kleine Werte. Als Referenzwerte kommen verschiedene Werte in Betracht. Beispielsweise kann die Varianz in einem definierten Gutzustand als Referenzwert dienen. Diese kann nach der Reglerinbetriebnahme mit einem PID-Tuner protokolliert werden. Solange die Regler und Streckenparameter unverändert bleiben, der Gutzustand also nicht verlassen wird, bewegt sich der CPI in einer Größenordnung von etwa 100% entsprechend dem Wert 1. Eine deutliche Verringerung des CPI-Wertes zeigt eine unpassende Reglereinstellung an, die z. B. durch Veränderungen im Prozess bei konstanten Reglerparametern verursacht werden kann. Bei einer auf diese Weise definierten Referenzvarianz ist es vorübergehend möglich, dass der CPI größer als 100% wird.

Ein weiteres Beispiel für einen Referenzwert der Varianz ist die sich mit einem theoretisch idealen PID-Regler einstellende Varianz, wobei zur Berechnung ein explizites Prozessmodell und ein explizites Störfiltermodell erforderlich sind. Diese Voraussetzungen sind in der Praxis jedoch selten erfüllt.

Als Referenzwert könnte auch die mit einem theoretischen Minimal-Varianz-Regler erhaltene Varianz dienen. Diese hängt nur von der Prozesstotzeit und vom Störungsmodell ab. Diese Form des CPI wird als Harris-Index bezeichnet und stellt für einen PID-Regler eine im Allgemeinen nicht erreichbare untere Schranke dar, weshalb der CPI Werte zwischen 0% für schlecht eingestellte Regler und nahe 100% für gut eingestellte Regler annimmt. Niedrige CPI-Werte liefern einen ersten Hinweis darauf, dass die Reglereinstellung noch verbessert werden kann. Dabei ist jedoch zu bedenken, dass die Minimalvarianz nur ein theoretisch erreichbarer Wert ist und der Minimal-Varianz-Regler Eigenschaften hat, die in praktischen Einsätzen nicht erwünscht sind, beispielsweise extrem große Stellgrößen. Bei einem CPI auf der Basis der Minimalvarianz ist es also nicht erstrebenswert, diesen um jeden Preis möglichst nahe an 100% zu bringen.

Anhand Figur 3 sollen im Folgenden einige deterministische Merkmale, die insbesondere zur Bewertung der Regelgüte geeignet sind, verdeutlicht werden. Dargestellt ist ein Zeitdiagramm mit den qualitativen Verläufen einiger Prozessvariablen des Regelkreises. Auf der Abszisse ist die Zeit t, auf der Ordinate der Sollwert SP, die Regelgröße y sowie die Stellgröße u aufgetragen. Es handelt sich um eine Prinzipdarstellung, in welcher auf die Angabe von Einheiten verzichtet wurde, da diese von der jeweiligen Applikation abhängen. Als im Wesentlichen vorbestimmter Verlauf des Sollwerts SP wird ein Sollwertsprung von einem Anfangswert SP0 auf einen Endwert SP1 zu einem Zeitpunkt t0 betrachtet. Daraufhin stellt sich etwa der dargestellte Verlauf der Regelgröße y mit einem Überschwingen über den stationären Endwert ein. Die absolute Höhe des Überschwingers Ovs_max wird auf die Höhe des Sollwertsprungs SP_height bezogen und in Prozent angegeben. Bei guter Reglereinstellung liegt der relative Überschwinger zwischen 0 und 15%. Überschwinger größer als 30% deuten auf eine zu schwache Dämpfung des Regelkreises, das heißt eine Neigung zu oszillierendem Verhalten, hin.

Ein weiteres Merkmal zur Beurteilung des Regelkreises ist das Einschwingverhältnis bei einem Sollwertsprung. Dieses wird berechnet als der Quotient aus einer Anstiegszeit T_rise durch eine Einschwingzeit T_settling, deren Definition anhand Figur 3 ohne Weiteres ableitbar ist. Die Einschwingzeit T_settling gibt dabei an, welche Zeitdauer nach dem Sprung vergeht, bis die Sprungantwort letztmalig in eine Zone mit einem maximalen Abstand BW vom Sollwert SP1 eintritt. Das Einschwingverhältnis bewegt sich bei gut eingestellten Reglern im Bereich von 30% bis 100%. Niedrigere Werte können durch eine zu große Nachstellzeit des Reglers verursacht sein.

Durch Auswertung von Archivdaten können Gesamtaussagen für längere Zeiträume gemacht und langsame Trends bzw. Verschlechterungen erkannt werden.

Um die Ergebnisse der Diagnose einem Bediener zu verdeutlichen, werden in einer Hauptansicht eines Faceplates, das auf einer Bedien- und Beobachtungsstation, beispielsweise einer SIMATIC-PCS7-OS, der aktuelle CPI, die Standardabweichung der Regelgröße y, die Mittelwerte der Regelgröße y und der Stellgröße u, die stationäre Verstärkung sowie die relativen Zeitanteile, während deren sich der Regler im Handbetrieb befindet, und die relativen Zeitanteile, in denen die Stellgröße u an die obere oder untere Begrenzung stößt, angezeigt. In einer anderen Ansicht "Setpoint" des Faceplates werden nach Ende eines Einschwingvorgangs in Folge eines Sollwertsprungs die maximale und relative Überschwingweite, die Einschwingzeit und das Einschwingverhältnis angezeigt. Diese Werte bleiben nach der Auswertung erhalten und werden erst beim nächsten Sprung gelöscht. In einer Ansicht "Parameter" kann die zur Mittelwertbildung erforderliche Fensterlänge vorgegeben werden. Zudem kann in dieser Ansicht mittels einer Schaltfläche eine Initialisierung der Referenzwerte für stochastische Merkmale ausgelöst werden. Die Referenzwerte von Varianz und Standardabweichung werden in dazu vorgesehenen Feldern angezeigt. Eine weitere Ansicht "Grenzen" dient zur Einstellung von Warn- und Alarmgrenzen für den Control Performance Index CPI und die relative Überschwingweite. Entsprechende Meldungen werden nur generiert, wenn der CPI unter einen vorbestimmten Wert fällt oder die Überschwingweite höher als die vorbestimmte Obergrenze ist. Es werden also für den CPI vorzugsweise nur Untergrenzen und für die Überschwingweite nur Obergrenzen vorgegeben. In einer Ansicht "Trend" werden berechnete zeitliche Verläufe des Control Performance Index CPI, des Mittelwerts der Regelgröße y und der Standardabweichung für eine leichtere Beurteilung durch einen Bediener ausgegeben. Gemäß SIMATIC PCS7-Standard werden in einer Ansicht "Meldungen" die durch den Diagnose-Funktionsbaustein erzeugten Meldungen mit Angabe ihres Datums, ihrer Zeit, ihrer Klasse, Ihres Status und einer Ereignisbeschreibung aufgelistet.

**Patentansprüche**

1. Diagnoseeinrichtung zur Überwachung des Betriebs eines Regelkreises eines Automatisierungssystems mit einem Datenspeicher (20), in welchem jeweils eine Folge von Sollwert- und Istwertdaten des Regelkreises (9) abspeicherbar ist, mit einer Auswerteeinrichtung (22) zur Bestimmung zumindest eines stochastischen Merkmals einer Folge von Sollwert- und/oder Istwertdaten und zum Vergleich des bestimmten Werts des Merkmals mit einem zugehörigen vorbestimmten Referenzwert, mit einer Auswerteeinrichtung (23) zur Bestimmung zumindest eines deterministischen Merkmals anhand der Folgen der Sollwert- und Istwertdaten und zum Vergleich des bestimmten Werts des Merkmals mit einem zugehörigen vorbestimmten Referenzwert und mit einer Auswahleinrichtung (21), durch welche der Zustand des Regelkreises (9) zumindest anhand der Folge der Sollwertdaten analysierbar ist, **dadurch gekennzeichnet, dass** durch die Auswahleinrichtung (21) im Fall eines im Wesentlichen stationären Zustands die Auswerteeinrichtung (22) zur Bestimmung zumindest eines stochastischen Merkmals und im Fall einer Anregung des Regelkreises (9) im Wesentlichen entsprechend einem Sollwertsprung die Auswerteeinrichtung (23) zur Bestimmung der relativen Überschwingweite und/oder des Einschwingverhältnises, das heißt des Quotienten aus Anstiegszeit und Einschwingzeit der Regelgröße (y), als deterministisches Merkmal aktivierbar ist.

2. Diagnoseeinrichtung nach Anspruch 1, **dadurch gekennzeichnet, dass** im Fall eines im Wesentlichen stationären Zustands die Varianz der Folge der Istwertdaten als stochastisches Merkmal bestimmbar und mit einem zugehörigen Referenzwert vergleichbar ist, der an einem gut arbeitenden Regelkreis vorbestimmt und abgespeichert wurde.

3. Diagnoseeinrichtung nach Anspruch 1 oder 2, **dadurch gekennzeichnet, dass** die Auswerteeinrichtung (22) zur Bestimmung eines stochastischen Merkmals durch die Auswahleinrichtung (21) erst erneut aktivierbar ist, wenn nach Beginn des Sollwertsprungs bei im Wesentlichen konstanten Sollwertdaten ein vorgebbares Vielfaches der Einschwingzeit vergangen ist.

4. Diagnoseeinrichtung nach einem der vorhergehenden Ansprüche, **dadurch gekennzeichnet, dass** sie als Software-Funktionsbaustein (15) ausgebildet ist, der in einer graphischen Bedienoberfläche (8) eines Engineering-Systems (7) mit Funktionsbausteinen (10...14) des Regelkreises (9) verschaltbar und zum Betrieb in ein Automatisierungsgerät (6) ladbar ist.

5. Diagnoseverfahren zur Überwachung des Betriebs eines Regelkreises eines Automatisierungssystems mit den folgenden Schritten:

Abspeichern von Soll- und Istwertdaten des Regelkreises (9) in einen Datenspeicher (20), Bestimmen zumindest eines stochastischen Merkmals einer Folge von Sollwert- und/oder Istwertdaten und Vergleichen des bestimmten Werts des Merkmals mit einem zugehörigen vorbestimmten Referenzwerts durch eine Auswerteeinrichtung (22), Bestimmen eines deterministischen Merkmals anhand der Folgen der Sollwert- und Istwertdaten und Vergleich des bestimmten Werts des Merkmals mit einem zugehörigen vorbestimmten Referenzwert **durch** eine Auswerteeinrichtung (23), Analysieren des Zustands des Regelkreises zumindest anhand der Folge der Sollwertdaten und Auswählen **durch** eine Auswahleinrichtung (21), **dadurch gekennzeichnet, dass**

- im Fall eines im Wesentlichen stationären Zustands die Auswerteeinrichtung (22) zur Bestimmung zumindest eines stochastischen Merkmals und
- im Fall einer Anregung des Regelkreises (9) im Wesentlichen entsprechend einem Sollwertsprung die Auswerteeinrichtung (23) zur Bestimmung der relativen Überschwingweite und/oder des Einschwingverhältnisses, das heißt des Quotienten aus Anstiegszeit und Einschwingzeit der Regelgröße (y), als deterministisches Merkmal aktiviert wird.

**Claims**

1. Diagnostic device for monitoring the functioning of a control loop in an automation-controlled system having a data memory (20), in which a sequence of setpoint value and actual value data of the control loop (9) can be stored in each instance, having an evaluation device (22) for determining at least one stochastic feature of a series of setpoint value and/or actual value data and for comparing the specific value of the feature with an associated predetermined reference value, having an evaluation device (23) for determining at least one deterministic feature on the basis of the sequence of the setpoint value and actual value data and for comparing the specific value of the feature with an associated predetermined reference value and having a selection device (21), by means of which the state of the control loop (9) can be analysed at least on the basis of the sequence of the setpoint value data, **characterised in that** the evaluation device (22) can be activated as a deterministic feature by the selection device (21) in the event of an essentially steady state in order to determine at least one stochastic feature and the selection device (23) can be activated as a deterministic feature in order to determine the relative overshoot and/or the settling ratio, in other words the quotients from rise time and settling time of the control variable (y) in the event of the control loop (9) essentially being excited according to a setpoint value change.

2. Diagnostic device according to claim 1, **characterised in that**, in the event of an essentially steady state, the variance of the sequence of actual value data can be determined as a stochastic feature and can be compared with an associated reference value, which was predetermined and stored on a control loop operating well.

3. Diagnostic device according to claim 1 or 2, **characterised in that** the evaluation device (22) is only able to be activated again by the selection device (21) in order to determine a stochastic feature when a predeterminable multiple of the settling time has passed after starting the setpoint value change with essentially constant setpoint value data.

4. Diagnostic device according to one of the preceding claims, **characterised in that** it is embodied as software functional module (15), which can be interconnected in a graphic operating interface (8) of an engineering system (7) with functional modules (10... 14) of the control loop (9) and can be loaded for operation in an automation device (6).

5. Diagnostic method for monitoring the functioning of a control loop of an automation-controlled system having the following steps:

Storing setpoint and actual value data of the control loop (9) in a data memory (20),
Determining at least one stochastic feature of a sequence of setpoint value and/or actual value data and comparing the specific value of the feature with an associated predetermined reference value by means of an evaluation facility (22), Determining a deterministic feature on the basis of the sequence of setpoint value and actual value data and comparing the certain value of the feature with an associated predetermined reference value by means of an evaluation device (23),
Analysing the state of the control loop at least on the basis of the sequence of setpoint value data and selecting by means of a selection device (21), **characterised in that**

- in the event of an essentially steady state, the evaluation device (22) is activated as a deterministic feature for determining at least one stochastic feature and
- in the event of the control loop (9) essentially being excited corresponding to a setpoint value change, the evaluation device (23) is activated as a deterministic feature in order to determine the relative overshoot and/or the settling ratio, in other words the quotients from the rise time and the settling time of the control loop (y).

## Revendications

1. Dispositif de diagnostic pour surveiller le fonctionnement d'un circuit de régulation d'un système d'automatisation, avec une mémoire de données (20) dans laquelle peut être mémorisée à chaque fois une séquence de données de valeurs de consigne et de valeurs réelles du circuit de régulation (9), avec un dispositif d'évaluation (22) pour la détermination d'au moins une caractéristique stochastique d'une séquence de données de valeurs de consigne et/ou de valeurs réelles et pour la comparaison de la valeur déterminée de la caractéristique à une valeur de référence prédéterminée associée, avec un dispositif d'évaluation (23) pour la détermination d'au moins une caractéristique déterministe à l'aide des séquences des données de valeurs de consigne et de valeurs réelles et pour la comparaison de la valeur déterminée de la caractéristique à une valeur de référence prédéterminée associée et avec un dispositif de sélection (21) par lequel l'état du circuit de régulation (9) est analysable au moins à l'aide de la séquence des données de valeurs de consigne, **caractérisé par le fait que** le dispositif de sélection (21) peut activer, dans le cas d'un état globalement stationnaire, le dispositif d'évaluation (22) destiné à la détermination d'au moins une caractéristique stochastique et, dans le cas d'une excitation du circuit de régulation (9) globalement suivant un saut de valeur de consigne, le dispositif d'évaluation (23) destiné à la détermination de la largeur de suroscillation relative et/ou du rapport de régime transitoire, c'est-à-dire du quotient du temps de montée et de la période transitoire de la grandeur réglée (y), comme caractéristique déterministe.

2. Dispositif de diagnostic selon la revendication 1, **caractérisé par le fait que**, dans le cas d'un état globalement stationnaire, la variance de la séquence des données de valeurs réelles peut être déterminée comme caractéristique stochastique et être comparée à une valeur de référence associée qui a été prédéterminée sur un circuit de régulation fonctionnant correctement et qui a été mémorisée.

**3.** Dispositif de diagnostic selon la revendication 1 ou 2, **caractérisé par le fait que** le dispositif de sélection (21) ne peut à nouveau activer le dispositif d'évaluation (22) destiné à la détermination d'une caractéristique stochastique que si, après le début du saut de valeur de consigne, pour des données de valeurs de consigne globalement constantes, un multiple pouvant être prescrit de la période transitoire s'est écoulé.

**4.** Dispositif de diagnostic selon l'une des revendications précédentes, **caractérisé par le fait qu'**il est conçu comme un module fonctionnel logiciel (15) qui peut être inséré dans une interface de commande graphique (8) d'un système d'ingénierie (7) avec modules fonctionnels (10 à 14) du circuit de régulation (9) et qui peut être chargé pour fonctionner dans un appareil d'automatisation (6).

**5.** Procédé de diagnostic pour surveiller le fonctionnement d'un circuit de régulation d'un système d'automatisation, avec les étapes suivantes :

mémorisation de données de valeurs de consigne et de valeurs réelles du circuit de régulation (9) dans une mémoire de données (20),
détermination, par un dispositif d'évaluation (22), d'au moins une caractéristique stochastique d'une séquence de données de valeurs de consigne et/ou de valeurs réelles et comparaison de la valeur déterminée de la caractéristique à une valeur de référence prédéterminée associée,
détermination, par un dispositif d'évaluation (23), d'une caractéristique déterministe à l'aide des séquences des données de valeurs de consigne et de valeurs réelles et comparaison de la valeur déterminée de la caractéristique à une valeur de référence prédéterminée associée,
analyse de l'état du circuit de régulation au moins à l'aide de la séquence des données de valeurs de consigne et sélection par un dispositif de sélection (21), **caractérisé par le fait que**

- dans le cas d'un état globalement stationnaire, on active le dispositif d'évaluation (22) destiné à la détermination d'au moins une caractéristique stochastique et
- dans le cas d'une excitation du circuit de régulation (9) globalement suivant un saut de valeur de consigne, on active le dispositif d'évaluation (23) destiné à la détermination de la largeur de suroscillation relative et/ou du rapport de régime transitoire, c'est-à-dire du quotient du temps de montée et de la période transitoire de la grandeur réglée (y), comme caractéristique déterministe.

# FIG 1

## FIG 2

## FIG 3

EP 1 528 447 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10007972 A1
- US 6192321 B1
- US 20020040284 A1